# FASCICULE DE BREVET EUROPEEN

(11) **EP 4 086 801 B1**
(45) Date de publication et mention de la délivrance du brevet: **28.06.2023**
(21) Numéro de dépôt: 22168530.8
(22) Date de dépôt: 14.04.2022
(51) Int. Cl.: G06F 21/75

(54) **PROCÉDÉ D'EXÉCUTION D'UNE FONCTION, SÉCURISÉ PAR DÉSYNCHRONISATION TEMPORELLE**
FUNKTIONSAUSFÜHRNGSVERFAHREN GEKENNZEICHNET DURCH ZEITLICHE DESYNCHRONISATION
FUNCTION EXECUTION METHOD CHARACTERIZED BY TEMPORAL DESYNCHRONISATION

(30) Priorité: 07.05.2021 FR 2104828
(43) Date de publication de la demande: 09.11.2022
(73) Titulaire: Commissariat à l'énergie atomique et aux énergies alternatives, 75015 Paris (FR)
(72) Inventeur: LEPLUS, Gaetan, 38054 GRENOBLE CEDEX 09 (FR); SAVRY, Olivier, 38054 GRENOBLE Cedex 9 (FR)
(74) Mandataire: INNOV-GROUP

(56) Documents cités:
- CN-A- 103 324 467
- US-A1- 2011 258 423
- US-B2- 7 412 608

## Description

L'invention concerne un procédé d'exécution d'une fonction, sécurisé par désynchronisation temporelle. Il concerne aussi un microprocesseur pour la mise en oeuvre de ce procédé.

La désynchronisation temporelle est un principe employé dans des contre-mesures logicielles ou matérielles pour rendre plus difficiles les tentatives de cryptanalyse d'une fonction exécutée, par exemple, par un microprocesseur d'un système embarqué. Par la suite, cette fonction exécutée est appelée « fonction sécurisée » car il s'agit généralement d'une fonction qui exécute des opérations qui sont la cible privilégiée d'un attaquant comme, par exemple, une fonction de chiffrement ou de déchiffrement.

La cryptanalyse d'une fonction consiste en particulier à étudier le fonctionnement de cette fonction pour révéler des informations secrètes traitées par cette fonction, ou modifier son fonctionnement. Les tentatives de cryptanalyse sont classiquement appelées « attaques ».

La désynchronisation temporelle est, par exemple, efficace pour rendre plus difficiles les attaques par canaux auxiliaires connues sous l'expression anglaise « Side Channel Attack ». Les attaques par canaux auxiliaires regroupent une grande variété d'attaques différentes possibles. Par exemple, certaines de ces attaques consistent à mesurer une grandeur physique corrélée aux opérations exécutées par le microprocesseur lorsqu'il exécute la fonction sécurisée. Cette grandeur physique peut être la consommation électrique, le rayonnement électromagnétique du microprocesseur, le bruit du microprocesseur, le temps d'exécution ou autres. Dans le cas où la grandeur physique est la consommation électrique du microprocesseur, cette attaque est connue sous l'acronyme DPA («Differential Power Analysis») ou CPA (« Corrélation Power Analysis »). Ces attaques visent à corréler un événement extérieur, tel que la mesure d'une grandeur physique, à l'instant où une instruction particulière de la fonction sécurisée est exécutée. Les techniques de désynchronisation temporelle visent à rendre plus difficile l'établissement de cette corrélation entre des événements extérieurs et l'exécution de certaines instructions particulières.

Une autre attaque connue est par exemple l'attaque par injection de fautes ou « attaque par fautes », connue sous l'expression anglaise « fault injection attack ». Cette attaque consiste à provoquer une faute ou un dysfonctionnement du microprocesseur au moment particulier où il exécute une instruction critique de la fonction sécurisée. Une instruction critique est, par exemple, une instruction de branchement conditionnel afin de provoquer un fonctionnement inattendu de cette fonction sécurisée. Dans le cadre de ces attaques, la désynchronisation temporelle augmente la difficulté pour un attaquant de cibler avec l'injection d'une faute l'instant où une instruction particulière de la fonction sécurisée est exécutée.

Ces attaques ont en commun qu'il faut corréler un événement extérieur, tel qu'une mesure de la consommation électrique ou l'injection d'une faute, à l'instant où une instruction particulière de la fonction sécurisée est exécutée. Les techniques de désynchronisation temporelle visent à rendre plus difficile l'établissement de cette corrélation entre des événements extérieurs et l'exécution de certaines instructions particulières. À cet effet, il a déjà été proposé d'introduire un retard aléatoire avant l'exécution de certaines instructions de la fonction sécurisée. Grâce à ces procédés connus, l'instant auquel s'exécute une instruction particulière d'une fonction sécurisée varie de façon aléatoire d'une exécution à l'autre de cette fonction sécurisée.

Pour introduire ce retard aléatoire, il a déjà été proposé d'exécuter, à des instants choisis aléatoirement, une séquence d'instructions factices. Une séquence d'instructions factices est une séquence d'instructions qui ne modifie en rien le résultat produit par la fonction sécurisée lorsque cette séquence est exécutée par le microprocesseur. Par exemple, la demande CN103324467A décrit un tel procédé.

La difficulté est de construire des séquences d'instructions factices qui ne soient pas facilement décelables par un attaquant. Pour cela, la demande CN103324467A propose de construire chaque instruction factice par tirage aléatoire. En particulier, l'opcode de chaque instruction factice est tiré de façon aléatoire dans un groupe d'opcodes prédéterminés utilisables pour construire une instruction factice. Le tirage aléatoire de l'opcode de l'instruction factice ralentit la construction de cette instruction factice.

De l'état de la technique est également connu de US7412608B2 et de US2011258423A1.

L'invention vise à proposer un procédé d'exécution d'une fonction, sécurisé par désynchronisation temporelle, plus robuste contre les attaques et dans lequel la construction des instructions factices est plus rapide. Elle a donc pour objet un tel procédé d'exécution conforme à la revendication 1.

L'invention a également pour objet un microprocesseur pour la mise en oeuvre du procédé revendiqué.

L'invention sera mieux comprise à la lecture de la description qui va suivre, donnée uniquement à titre d'exemple non limitatif, et faite en se référant aux dessins sur lesquels :
- la figure 1 est une illustration schématique, le long d'un axe, de différents instants où des instructions d'une fonction sécurisée sont exécutées,
- la figure 2 est une illustration schématique de la structure d'un appareil électronique apte à exécuter une fonction sécurisée ;
- la figure 3 est une illustration schématique d'un module de désynchronisation temporelle mis en oeuvre dans l'appareil de la figure 2;
- la figure 4 est une illustration schématique d'un circuit de sélection d'un registre invalide mis en oeuvre dans le module de désynchronisation de la figure 2;
- la figure 5 est une illustration schématique d'un sélectionneur aléatoire mis en oeuvre dans le circuit de la figure 4;
- la figure 6 est un organigramme d'un procédé d'exécution d'une fonction sécurisée mis en oeuvre par l'appareil de la figure 2.

### Chapitre I : Terminologies et notations

Dans ces figures, les mêmes références numériques sont utilisées pour désigner les mêmes éléments. Dans la suite de cette description, les caractéristiques et fonctions bien connues de l'homme du métier ne sont pas décrites en détail.

Dans cette description, les définitions suivantes sont adoptées.

Un « programme » désigne un ensemble d'une ou de plusieurs fonctions prédéterminées que l'on souhaite faire exécuter par un microprocesseur.

Un « code source » est une représentation du programme dans un langage informatique, n'étant pas directement exécutable par un microprocesseur et étant destiné à être transformé, par un compilateur, en un code machine directement exécutable par le microprocesseur.

Un programme ou un code est dit être « directement exécutable » lorsqu'il est apte à être exécuté par un microprocesseur sans que ce microprocesseur n'ait besoin au préalable de le compiler au moyen d'un compilateur ou de l'interpréter au moyen d'un interpréteur.

Une « instruction » désigne une instruction machine exécutable par un microprocesseur. Une telle instruction est constituée :
- d'un opcode, ou code d'opération, codant la nature de l'opération à exécuter, et
- d'un ou plusieurs opérandes définissant la ou les valeurs des paramètres de cette opération.

Un « code machine » est un ensemble d'instructions machines. Il s'agit typiquement d'un fichier contenant une succession de bits portant la valeur « 0 » ou « 1 », ces bits codant les instructions à exécuter par le microprocesseur. Le code machine est directement exécutable par le microprocesseur, c'est-à-dire sans nécessiter une compilation ou une interprétation préalable. Le code machine comporte une succession d'instructions classées les unes après les autres et qui forme, dans le code machine, une suite ordonnée d'instructions.

Un « code binaire » est un fichier contenant une succession de bits portant la valeur « 0 » ou « 1 ». Ces bits codent des données et des instructions à exécuter par le microprocesseur. Ainsi, le code binaire comprend au moins un code machine et en plus, généralement, des données numériques traitées par ce code machine.

Une "instruction légitime" est une instruction qui influence le résultat produit par la fonction sécurisée lorsqu'elle est exécutée par un microprocesseur. Typiquement, l'exécution d'une instruction légitime modifie le résultat produit par la fonction sécurisée. Autrement dit, si l'exécution d'une instruction légitime est omise, le résultat produit par la fonction sécurisée n'est pas le même que lorsque cette instruction légitime est exécutée. Le résultat d'une fonction sécurisée peut être de toute nature. Par exemple, il peut s'agir de valeurs numériques, de signaux de commande d'un appareil électronique ou autres. Les instructions légitimes font nécessairement partie du code machine généré par la compilation du code source de la fonction sécurisée.

A l'inverse, une "instruction factice" est une instruction qui n'influence pas le résultat produit par la fonction sécurisée lorsqu'elle est exécutée par le microprocesseur. Ainsi, l'exécution d'une instruction factice ne modifie pas le résultat produit par la fonction sécurisée. Autrement dit, si l'exécution d'une instruction factice est omise, le résultat produit par la fonction sécurisée est systématiquement le même que lorsque cette instruction factice est exécutée. Les instructions factices ne font pas nécessairement partie du code machine généré lors de la compilation du code source de la fonction sécurisée.

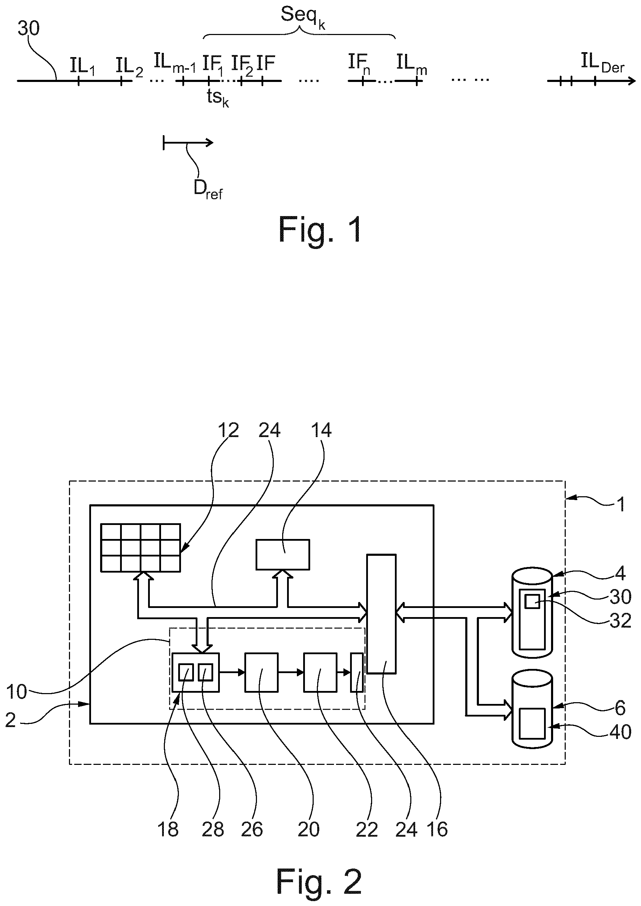

La figure 1 est utilisée pour introduire différentes notations qui sont ensuite utilisées dans ce texte. La figure 1 représente un axe des temps 30 sur lequel chaque graduation correspond à un instant où est exécutée une instruction légitime ILₘ d'une fonction sécurisée. L'indice « m » est le numéro d'ordre de l'instruction légitime par rapport aux autres instructions légitimes exécutées de la fonction sécurisée. Ici, ce numéro d'ordre "m" est attribué en prenant comme origine la première instruction légitime IL₁ exécutée de la fonction sécurisée et en progressant dans une direction D_{ref} de référence. Ainsi, en partant de l'instruction IL₁ et en allant dans la direction D_{ref}, la deuxième instruction légitime rencontrée est l'instruction IL₂ et ainsi de suite jusqu'à la dernière instruction légitime IL_{Der} de la fonction sécurisée rencontrée en avançant dans la direction D_{ref}. Ici, la direction D_{ref} correspond à la direction dans laquelle les instructions ILₘ sont temporellement exécutées les unes après les autres par un microprocesseur électronique. On notera aussi que l'ordre dans lequel les instructions ILₘ sont exécutées peut dépendre des valeurs des variables traitées par la fonction sécurisée. Ainsi, la valeur de l'indice "m" associé à une instruction légitime exécutée peut varier en fonction des valeurs des variables traitées. Par la suite, pour simplifier les explications et parce que cela correspond au pire des cas, on considère que les valeurs des variables traitées à chaque exécution de la fonction sécurisée sont constantes de sorte que la valeur de l'indice "m" associé à une instruction donnée est toujours le même. Dans le cas contraire où les valeurs des variables traitées changent et provoquent une modification de l'ordre d'exécution des instructions légitimes, cela augmente encore plus la désynchronisation temporelle.

Par la suite, sauf indication contraire, les termes tels que « instruction légitime précédente », « instruction légitime suivante », « avant », « après » sont définis par rapport à la direction D_{ref}. Ainsi, l'instruction légitime précédant immédiatement l'instruction ILₘ est l'instruction ILₘ₋₁.

Enfin, lors de l'exécution de la fonction sécurisée, une ou plusieurs séquences Seqₖ d'instructions factices sont insérées. Une séquence Seqₖ est un groupe d'une ou plusieurs instructions factices IFₙ systématiquement exécutées les unes après les autres. L'indice "n" est le numéro d'ordre de l'instruction factice IFₙ à l'intérieur de la séquence Seqₖ. Les séquences Seqₖ sont disjointes les unes des autres. Ainsi, il existe au moins une instruction légitime entre deux séquences Seqₖ et Seqₖ₊₁ consécutives.

L'indice k est le numéro d'ordre de la séquence Seqₖ par rapport aux autres séquences d'instructions factices insérées. Ce numéro d'ordre est attribué en prenant comme origine la séquence Seq₁ et en progressant dans la direction D_{ref}. Ainsi en partant de l'instruction IL₁ et en progressant dans la direction D_{ref}, la première séquence d'instructions factices rencontrée est la séquence Seq₁, la deuxième séquence d'instructions factices rencontrée est la séquence Seq₂ et ainsi de suite.

### Chapitre II : Exemples de modes de réalisation

La figure 2 représente un appareil électronique 1 comportant un microprocesseur 2, une mémoire principale 4 et un support 6 de stockage de masse. Par exemple, l'appareil 1 est un ordinateur, un smartphone, une tablette électronique, une carte à puce ou similaire. Pour simplifier la figure 1, les autres composants de l'appareil 1 n'ont pas été représentés. Typiquement, l'appareil 1 comporte notamment en plus :
- une horloge qui rythme le fonctionnement du microprocesseur 2, et
- une alimentation qui fournit l'énergie nécessaire au fonctionnement de l'appareil 1.

Le microprocesseur 2 comporte ici :
- une chaîne matérielle 10 de traitement des instructions à exécuter;
- un ensemble 12 de registres ;
- un module de commande 14, et
- une interface 16 d'entrée/sortie de données.

La mémoire 4 est configurée pour stocker des instructions d'un code binaire 30 d'un programme devant être exécuté par le microprocesseur 2. Ce programme comporte notamment le code machine d'une fonction sécurisée à exécuter.

La fonction sécurisée est typiquement une fonction qui manipule et/ou traite des informations secrètes lors de son exécution. Par exemple, la fonction sécurisée est une fonction de chiffrement ou de déchiffrement. Dans le cas des fonctions de chiffrement ou de déchiffrement, l'information secrète correspond souvent à une clé de chiffrement ou de déchiffrement. Par exemple, ici, la fonction sécurisée est une fonction de chiffrement AES (« Advanced Encryption Standard »). La fonction sécurisée comporte une succession d'instructions légitimes qui code les opérations réalisées par le microprocesseur 2 lorsqu'il exécute cette fonction sécurisée.

La mémoire 4 est une mémoire à accès aléatoire. Typiquement, la mémoire 4 est une mémoire volatile. La mémoire 4 peut être une mémoire externe au microprocesseur 2 comme représenté sur la figure 1. Dans ce cas, la mémoire 4 est, par exemple, réalisée sur un substrat mécaniquement séparé du substrat sur lequel sont réalisés les différents éléments du microprocesseur 2 comme la chaîne 10.

Dans cet exemple de réalisation le code binaire 30 comporte notamment un code machine 32 de la fonction sécurisée.

A titre d'illustration, le microprocesseur 2 est un microprocesseur à jeu d'instructions réduits plus connu sous l'acronyme RISC ("Reduced Instruction Set Computer") implémentant, par exemple, un jeu d'instructions conforme à RISC-V. Un jeu d'instructions définit de façon limitative les syntaxes possibles pour les instructions que le microprocesseur 2 est capable d'exécuter. Ce jeu d'instructions définit donc notamment l'ensemble des opcodes possibles pour une instruction. La syntaxe d'une instruction est incorrecte si sa syntaxe ne correspond à aucune des syntaxes possibles pour une instruction exécutable par le microprocesseur 2.

La chaîne 10 est plus connue sous le terme anglais de "pipeline". La chaîne 10 permet de commencer à exécuter une instruction du code machine alors que le traitement, par la chaîne 10, de la précédente instruction de ce code machine n'est pas encore terminé. De telles chaînes de traitement sont bien connues et seuls les éléments de la chaîne 10 nécessaires à la compréhension de l'invention sont décrits plus en détail.

La chaîné 10 comporte typiquement les étages suivants:
- un chargeur 18 d'instructions,
- un décodeur 20 d'instructions,
- une unité arithmétique et logique 22 qui exécute les instructions, et
- un module 24 d'écriture en mémoire.

Le chargeur 18 charge la prochaine instruction à exécuter par l'unité 22 à partir de la mémoire 4. Plus précisément, le chargeur 18 charge l'instruction du code machine 32 sur laquelle pointe un compteur ordinal 26. Sauf si sa valeur est modifiée par l'exécution d'une instruction de branchement, la valeur du compteur ordinal 26 est incrémentée d'un pas unitaire à chaque cycle de horloge du microprocesseur. Le pas unitaire est égal à l'écart entre les adresses de deux instructions immédiatement consécutives dans le code machine 32.

Le décodeur 20 décode l'instruction chargée par le chargeur 18 pour obtenir des signaux de configuration qui configurent le microprocesseur 2 pour qu'il exécute, au prochain cycle d'horloge, l'instruction chargée. Un de ces signaux de configuration code la nature de l'opération à exécuter par l'unité 22. Ce signal de configuration correspond à l'opcode de l'instruction chargée. D'autres signaux de configuration indiquent, par exemple, si l'instruction chargée est une instruction de chargement d'une donnée depuis la mémoire 4 ou d'écriture d'une donnée dans la mémoire 4. Ces signaux de configuration sont transmis à l'unité 22. D'autres signaux de configuration comportent les valeurs des opérandes chargées. Selon l'instruction à exécuter, des signaux de configuration sont aussi transmis à l'ensemble 12 de registres ou à l'unité 22.

Lorsque le décodeur 20 n'arrive pas à décoder une instruction, il génère un signal d'erreur ou il génère une instruction "pas d'opération" plus connue sous l'acronyme NOP ("No-OPeration"). Typiquement, cela se produit si la syntaxe de l'instruction chargée est incorrecte. Lorsque l'unité 22 exécute une instruction NOP, elle ne réalise aucune opération.

L'unité 22 exécute les unes après les autres les instructions chargées. L'unité 22 est aussi capable d'enregistrer le résultat de ces instructions exécutées dans un ou plusieurs des registres de l'ensemble 12.

Dans cette description, on utilisera comme synonymes « exécution par le microprocesseur 2 » et « exécution par l'unité 22 ».

Le module 24 écrit dans la mémoire 4 le résultat d'un calcul de l'unité 22 ou le contenu d'un registre de l'ensemble 12.

Une instruction donnée du code machine doit successivement être traitée, dans l'ordre, par le chargeur 18, le décodeur 20 et l'unité 22. De plus, le chargeur 18, le décodeur 20 et l'unité 22 sont capables de travailler en parallèle les uns des autres. Ainsi, à un instant donné, le chargeur 18 peut être en train de charger l'instruction suivante, le décodeur 20 en train de décoder l'instruction courante et l'unité 22 en train d'exécuter la précédente instruction. La chaîne 10 permet ainsi de traiter en parallèle au moins trois instructions du code machine 30.

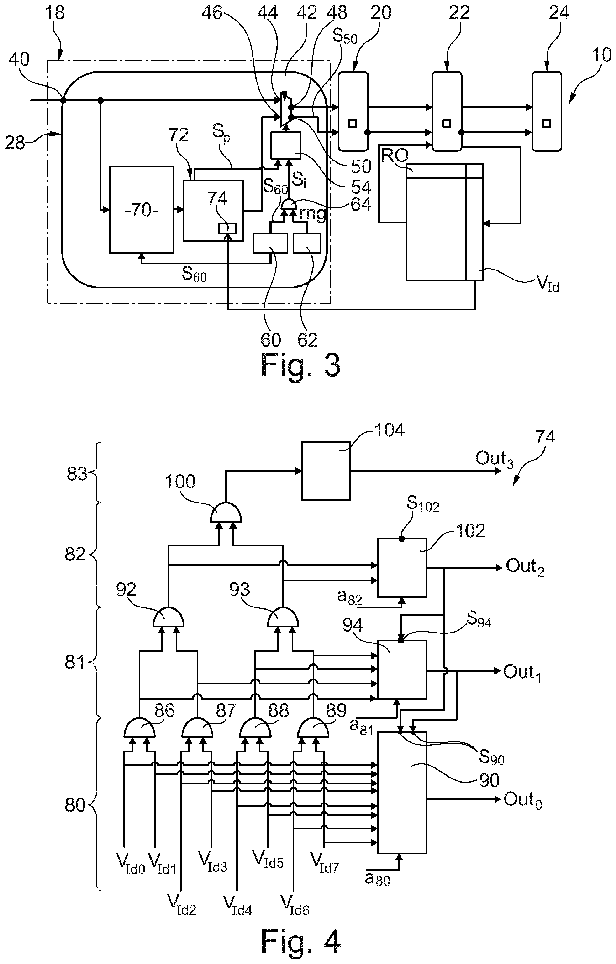

De plus, dans ce mode de réalisation, le chargeur 18 comporte un module matériel 28 de désynchronisation temporelle. Le module 28 est capable de produire de la variabilité temporelle lors de chaque exécution de la fonction sécurisée. Pour cela, le module 28 introduit un retard aléatoire avant l'exécution de certaines instructions ILₘ de la fonction sécurisée. Pour introduire un retard, le module 28 insère une séquence Seqₖ d'instructions factices entre les instructions ILₘ et ILₘ₋₁. Une exemple de mode de réalisation du module 28 est décrit plus en détail en référence à la figure 3.

Dans cet exemple de réalisation, l'ensemble 12 comporte des registres généraux utilisables pour stocker tout type de données et des registres dédiés. Contrairement aux registres généraux, les registres dédiés sont dédiés au stockage de données particulières généralement automatiquement générées par le microprocesseur 2.

Le module 14 est configuré pour déplacer des données entre l'ensemble 12 de registres et l'interface 16. L'interface 16 est notamment apte à acquérir des données et des instructions, par exemple, depuis la mémoire 4 et/ou le support 6.

Le microprocesseur 2 comporte ici un bus 24 qui relie les différents composants du microprocesseur 2 entre eux.

Le support 6 est typiquement une mémoire non volatile. Par exemple, il s'agit d'une mémoire du type EEPROM ou Flash. Il contient ici une copie 40 de sauvegarde du code binaire 30. Typiquement, c'est cette copie 40 qui est automatiquement recopiée dans la mémoire 4 pour restaurer le code 30, par exemple, après une coupure de courant ou similaire ou juste avant que débute l'exécution du code 30.

La figure 3 représente plus en détail le module 28 de désynchronisation temporelle. Le module 28 comporte :
- une entrée 40 qui reçoit les instructions légitimes chargées les unes après les autres, et
- un multiplexeur 42 qui comporte une entrée 44 raccordée à l'entrée 40.
Le multiplexeur 42 comporte aussi une entrée 46 ainsi qu'une sortie 48 qui délivrent l'instruction légitime reçue sur son entrée 40 et, en alternance, une instruction factice reçue sur son entrée 46. La sortie 48 du multiplexeur 42 est raccordée à l'entrée du décodeur 20.

Le multiplexeur 42 comporte aussi une sortie 50 raccordée au décodeur 20, à l'unité 22 et au module 24. Le multiplexeur 42 délivre sur cette sortie 50 un signal identifiant une instructions factices lorsque l'entrée 46 est sélectionnée. Ici, le multiplexeur 42 délivre, sur la sortie 50, la valeur booléenne « 1 » lorsqu'il délivre sur sa sortie 48 une instruction factice et sinon la valeur « 0 ».

Le multiplexeur 42 est commandé par un circuit 54 de commande. Le circuit 54 commande le multiplexeur 42 pour sélectionner l'entrée 46 lorsqu'il reçoit un signal Sᵢ égal à "1". Lorsqu'il est égal à "1", le signal Sᵢ déclenche l'insertion d'une nouvelle séquence Seqₖ d'instructions factices. La valeur « 0 » du signal Sᵢ inhibe le déclenchement de l'insertion d'une nouvelle séquence Seqₖ. Le circuit 54 maintient aussi l'entrée 46 sélectionnée tant qu'il reçoit un signal Sₚ égal à « 1 ». La valeur « 1 » du signal Sₚ indique que la séquence Seqₖ est en cours d'insertion. La valeur « 0 » du signal Sₚ indique au contraire qu'il n'y a aucune séquence Seqₖ en cours d'insertion.

Pour générer le signal Sᵢ, le module 28 comporte :
- un diviseur 60 d'horloge qui génère un signal S₆₀ d'horloge dont la fréquence est égale à 2Fᵢ,
- un générateur 62 d'un nombre aléatoire booléen noté "rng", et
- une porte 64 qui réalise l'opération logique « ET » entre le signal S₆₀ et la valeur du nombre rng et délivre, sur sa sortie, en tant que signal Sᵢ, le résultat de cette opération logique.

Le diviseur 60 divise la fréquence d'horloge du microprocesseur 2 pour obtenir un signal d'horloge S₆₀ dont la fréquence est égale à 2Fᵢ. La fréquence Fᵢ est une valeur prédéterminée enregistrée ici dans un registre interne du microprocesseur 2. Par exemple, ce registre interne particulier est le registre de contrôle et de statut du microprocesseur 2 plus connu sous l'acronyme CSR (« Control and Status Register») dans le cas d'une architecture RISC-V Ce signal 60 est ici un signal rectangulaire qui passe de la valeur « 0 » à la valeur « 1 » après chaque période de durée 1/(2Fᵢ).

Le générateur 62 fait varier de façon aléatoire la valeur du nombre rng entre « 0 » et « 1 » avec une fréquence supérieure ou égale à 2Fᵢ. Ici, les probabilités des valeurs « 0 » et « 1 » du nombre rng sont égales. Ainsi, en moyenne, la fréquence à laquelle le signal Sᵢ passe de « 0 » à « 1 » est égale à la fréquence Fᵢ.

Pour générer une séquence Seqₖ d'instructions factices, le module 28 comporte :
- une mémoire 70, et
- un constructeur 72 de séquence d'instructions factices.

La mémoire 70 est une mémoire capable d'enregistrer un bloc de K opcodes d'instructions légitimes successives, où K est un nombre entier supérieur ou égal à un, cinq ou dix. Pour cela, la mémoire 70 est raccordée à l'entrée 40 sur laquelle sont reçues les instructions légitimes chargées.

Ici, l'enregistrement d'un bloc de K opcodes d'instructions légitimes est déclenché à la fréquence 2Fᵢ. Pour cela, la mémoire 70 reçoit le signal S₆₀ généré par le diviseur 60.

Le constructeur 72 construit chaque séquence Seqₖ à partir du bloc d'opcodes enregistré dans la mémoire 70 et en fonction de deux nombres Nb_{L} et Nbᵢ. Le nombre Nb_{L} est un nombre de boucles. Le paramètre Nbᵢ est un nombre d'instructions factices par boucle. Le nombre Nbᵢ est inférieur ou égal à K et supérieur ou égal à un.

Les valeurs des nombres Nb_{L} et Nbᵢ sont enregistrées dans un registre interne du microprocesseur 2. Ici, il s'agit d'un registre interne du microprocesseur 2 qui peut être écrit et lu à l'aide d'instructions exécutées par l'unité 22. Par exemple, les valeurs de ces nombres Nb_{L} et Nbᵢ sont enregistrées dans le même registre CSR que celui utilisé pour enregistrer la valeur de la fréquence Fᵢ. Par exemple, ce registre CSR est un registre de 32 bits. Les 20 premiers bits de ce registre sont alors utilisés pour enregistrer la valeur de la fréquence Fᵢ, puis les 6 bits suivants sont utilisés pour enregistrer la valeur du nombre Nb_{L} et les 6 bits suivants sont utilisés pour enregistrer la valeur du nombre Nbᵢ.

Ici, la séquence Seqₖ construite par le constructeur 72 comporte une sous-séquence de Nbᵢ instructions factices répétée Nb_{L} fois. Ainsi, les nombres Nb_{L} et Nbᵢ permettent de régler le nombre d'instructions factices contenues dans la séquence Seqₖ. Ils permettent donc d'ajuster la durée approximative du retard introduit lorsque cette séquence Seqₖ est exécutée par l'unité 22 entre l'exécution des instructions ILₘ₋₁ et ILₘ.

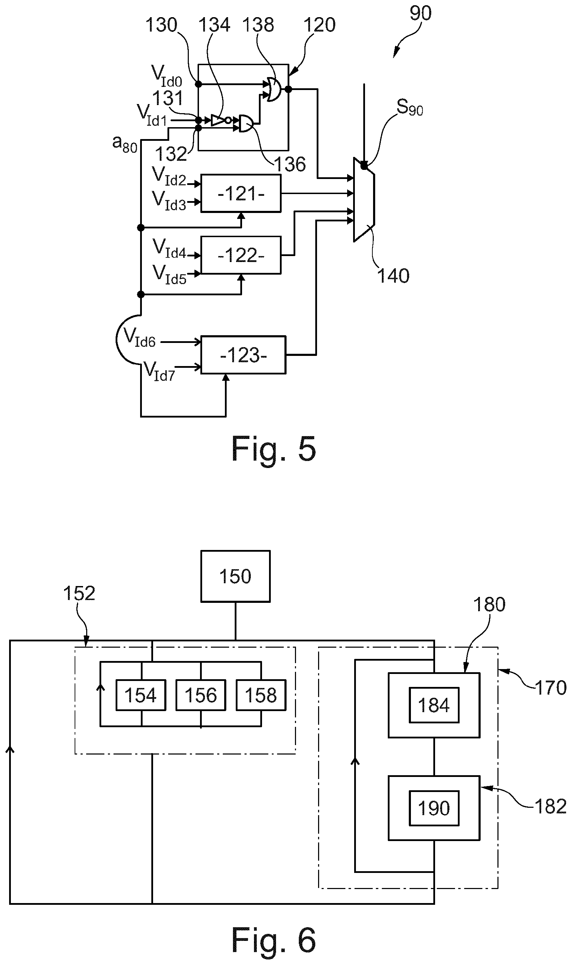

La construction d'une instruction factice à partir des opcodes enregistrés dans la mémoire 70 est décrite plus en détail en référence au procédé de la figure 6.

Ici, le constructeur 72 comporte un circuit 74 de sélection d'un registre invalide dans l'ensemble 12. Un registre "invalide" est un registre de l'ensemble 12 dans lequel une instruction factice d'écriture peut écrire sans que cela puisse modifier le résultat produit par l'exécution de la fonction sécurisée. À l'inverse, un registre "valide" est un registre qui contient une valeur utilisée par la fonction sécurisée pour produire son résultat. Autrement dit, une registre valide contient une valeur qui est traitée par une instruction légitime. Une instruction factice d'écriture ne peut pas écrire une valeur dans un registre valide sans prendre le risque de modifier le résultat produit par la fonction sécurisée.

Ici, chaque registre de l'ensemble 12 est associé à un bit de validité V_{Id}. Ce bit prend la valeur « 1 » si le registre auquel il est associé est valide et prend la valeur « 0 » dans le cas contraire.

Le circuit 74 sélectionne de façon automatique et aléatoire, par exemple à chaque cycle d'horloge du microprocesseur 2, un registre invalide parmi l'ensemble des registres de l'ensemble 12. Si tous les registres de l'ensemble 12 dans lequel il est possible d'écrire sont valides, alors le circuit 74 sélectionne un registre "factice" dans lequel une instruction factice d'écriture peut toujours écrire sans risquer de modifier le résultat produit par la fonction sécurisée. Ici, le registre factice est un registre de l'ensemble 12 dans lequel l'écriture est interdite. Ainsi, l'exécution d'une instruction factice d'écriture dans ce registre ne modifie en rien le contenu de ce registre. Dans le cas d'une architecture ARM, un tel registre est connu sous le terme de "registre R0".

La figure 4 représente plus en détail un mode de réalisation possible du circuit 74 de sélection d'un registre invalide. Ce mode de réalisation est décrit dans le cas particulier où le circuit 74 reçoit en entrée 8 bits de validité notés V_{Id0} à V_{Id7} et des bits aléatoires a₈₀, a₈₁ et a₈₂. Toutefois, l'enseignement donné dans ce cas particulier se généralise à un nombre quelconque de bits de validité et donc à un nombre quelconque de registres.

Le circuit 74 comporte quatre étages 80 à 83 successifs.

L'étage 80 reçoit les huit bits de validité V_{Id0} à V_{Id7} et le bit aléatoire a₈₀. L'étage 80 comporte quatre portes logiques 86 à 89 et un sélectionneur aléatoire 90. Les portes logiques 86 à 89 sont des portes qui réalisent l'opération logique « ET ». Les deux entrées de chacune de ces portes logiques 86 à 89 sont raccordées à deux bits de validité respectifs identifiés sur la figure 4 par les références V_{Id0} et V_{Id7}. Ainsi, la sortie de chaque porte 86 à 89 prend la valeur « 0 » si au moins l'un des bits de validité reçu en entrée est égal à « 0 » et correspond donc à un registre invalide.

L'étage 81 comporte deux portes logiques 92 et 93 qui réalisent l'opération logique « ET » et un sélectionneur aléatoire 94. Les deux entrées de la porte 92 sont raccordées, respectivement, aux sorties des portes 86 et 87. Les deux entrées de la porte 93 sont raccordées, respectivement, aux sorties des portes 88 et 89.

Ainsi, si l'une des sorties des portes 86 et 87 prend la valeur « 0 », la sortie de la porte 92 est égale à « 0 ». Lorsque la sortie de la porte 92 est égale à « 0 », cela signifie que l'un des bits de validité V_{Id0} à V_{Id3} est égal à "0". Autrement dit, au moins l'un des registres associés à cette plage de bits de validité est un registre invalide. Le fonctionnement de la porte 93 est le même que le fonctionnement de la porte 92 mais pour les bits de validité V_{Id4} à V_{Id7}.

L'étage 82 comporte une seule porte logique 100 qui réalise l'opération logique « ET » et un sélectionneur aléatoire 102. Les entrées de la porte 100 sont raccordées, respectivement, aux sorties des portes 92 et 93. Ainsi, si la sortie de la porte 100 prend la valeur « 0 », cela signifie qu'il existe au moins un bit de validité parmi les bits de validité V_{Id0} à V_{Id7} qui est égal à « 0 ». Autrement dit, il existe au moins un registre invalide. À l'inverse, si la sortie de la porte 100 est égale à "1", cela signifie qu'il n'existe pas de registre invalide parmi les registres associés aux bits de validité V_{Id0} à V_{Id7}.

L'étage 83 comporte un sélectionneur 104 qui force la sélection du registre R0 lorsqu'il reçoit en entrée un signal égal à « 1 ». Ici, son entrée est raccordée à la sortie de la porte 100. Le sélectionneur 104 comporte une sortie Out₄ qui prend la valeur « 1 » lorsque son entrée est égale à « 1 » et sinon la valeur « 0 ».

Les sélectionneurs 90, 94 et 102 sont raccordés, respectivement, aux entrées des portes logiques de l'étage auxquelles ils appartiennent. De plus, chaque sélectionneur 90, 94 et 102 comporte :
- une entrée qui reçoit un bit tiré de façon aléatoire, et
- une entrée qui permet de sélectionner les deux entrées d'une porte logique particulière du même étage.

Ici, les sélectionneurs 90, 94 et 102 reçoivent, respectivement, les bits aléatoires a₈₀, a₈₁ et a₈₂.

Les entrées des sélectionneurs 90, 94 et 102 qui permettent de sélectionner les deux entrées d'une porte logique particulière portent, respectivement, les références S₉₀, S₉₂ et S₁₀₂. Ici, l'entrée S₁₀₂ sélectionne systématiquement les deux entrées de la porte 100 car il n'existe qu'une seule porte logique dans l'étage 82.

Chaque sélectionneur 90, 94 et 102 comporte une sortie, notée respectivement Out₀, Out₁ et Out₂. Chaque sortie d'un sélectionneur prend soit la valeur « 0 » soit la valeur « 1 ».

La sortie Out₂ du sélectionneur 102 est raccordée à l'entrée S₉₄. Lorsque la sortie Out₂ est égale à « 0 », le sélectionneur 94 sélectionne les entrées de la porte 92. Lorsque la sortie Out₂ est égale à « 1 », le sélectionneur 94 sélectionne les entrées de la porte 93.

Les sorties Out₂ et Out₁ sont également raccordées à l'entrée S₉₀. La concaténation, dans l'ordre, des sorties Out₂ et Out₁, forme une valeur, codée sur deux bits, comprise entre zéro et trois. Les valeurs zéro à trois sélectionnent, respectivement, les portes logiques 86 à 89. Ainsi, lorsque l'entrée S₉₀ reçoit la valeur « 0 », le sélectionneur 90 sélectionne les entrées de la porte 86. Lorsque l'entrée S₉₀ reçoit la valeur « 1 », le sélectionneur 90 sélectionne les entrées de la porte 87 et ainsi de suite.

La concaténation, dans l'ordre, des sorties Out₃ à Out₀, forme une valeur codée sur 4 bits et comprise entre 0 et 15. Les valeurs 0 à 7 correspondent aux registres associés, respectivement, aux bits V_{Id0} à V_{Id7}. Une valeur supérieure ou égale à huit correspond au registre R0.

La figure 5 représente un mode de réalisation d'un sélectionneur aléatoire dans le cas particulier du sélectionneur 90. Les sélectionneurs 94 et 102 sont construits et fonctionnent de la même façon sauf que le nombre d'entrées de ces sélectionneurs 94, 102 est adapté au nombre de portes logiques auxquels ils sont raccordés.

Le sélectionneur 90 comporte autant de blocs de sélection qu'il y a de portes logiques dans l'étage 80. Il comporte donc ici quatre blocs 120 à 123 de sélection. Les blocs 120 à 123 sont raccordés aux entrées, respectivement, des portes logiques 86 à 89 et donc chacun à une paire respective de bits de validité.

Les blocs 120 à 123 sont structurellement identiques les uns aux autres. Ainsi, seul le bloc 120 est décrit plus en détail. Le bloc 120 comporte :
- une entrée 131 raccordée à l'entrée de la porte 86 qui reçoit le bit V_{Id0},
- une entrée 132 raccordée à l'entrée de la porte 86 qui reçoit le bit V_{Id1}, et
- une entrée 133 qui reçoit, à chaque cycle d'horloge, le bit aléatoire a₈₀.

L'entrée 131 est raccordée à une porte logique 134 qui réalise l'opération logique « NON ». Cette porte logique transforme un « 0 » en un « 1 » et vice-versa.

La sortie de la porte logique 134 et l'entrée 132 sont raccordées à des entrées respectives d'une porte logique 136 qui réalise l'opération logique « ET ». L'entrée 130 et la sortie de la porte 136 sont raccordées à des entrées respectives d'une porte logique 138 qui réalise l'opération logique « OU ». La sortie de la porte 138 est raccordée à une entrée d'un multiplexeur 140.

Les autres entrées du multiplexeur 140 sont raccordés chacune à une sortie respective des blocs 121 à 123. Le multiplexeur 140 sélectionne la sortie d'un des blocs 120 à 123 en fonction du signal reçu sur l'entrée S₉₀.

Lorsque la sortie du bloc 120 est égale à « 0 », cela indique que c'est le bit V_{Id0} qui a est égal à "0". À l'inverse, lorsque la sortie du bloc 120 est égale à « 1 », cela indique que c'est le bit V_{Id1} qui est égal à "0".

Le bloc 120 fonctionne de la façon suivante :
1) Lorsque les deux entrées 130, 131 sont égales à « 0 », il sélectionne aléatoirement l'une des entrées de cette porte logique. Pour cela, sa sortie est prise égale au bit a₈₀ reçu au même instant.
2) Lorsqu'une seule des deux entrées 130, 131 est égale à « 0 », il sélectionne systématiquement l'entrée qui est égale à « 0 ».
3) Lorsque les deux entrées de la porte logique sélectionnée sont égales à « 1 », la sortie est égale à « 1 ».

Ainsi, si l'entrée S₉₀ sélectionne la porte 86, la sortie Out₀ identifie, parmi les deux entrées de la porte 86, celle qui est égale à "0".

Le fonctionnement du microprocesseur 2 va maintenant être décrit en référence au procédé de la figure 6 dans le cas particulier de l'exécution du code machine 32 d'une fonction sécurisée.

Initialement, lors d'une phase 150, le code machine est chargé dans la mémoire 4. Le code machine 32 est alors enregistré dans la mémoire 4.

Le code machine 32 comporte des instructions de configuration qui, lorsqu'elles sont exécutées par le microprocesseur 2, règlent les valeurs de la fréquence Fᵢ et des nombres Nb_{L} et Nbᵢ.

Ensuite, lors d'une phase 152, les instructions légitimes du code machine 32 sont exécutées par le microprocesseur 2. Lors de la phase 152, le chargeur 18 charge ces instructions légitimes les unes après les autres.

Plus précisément, pour cela, chaque instruction légitime est d'abord chargée par le chargeur 18. Puis elle est décodée par le décodeur 20 et enfin exécutée par l'unité 22. L'instruction légitime chargée est celle qui se situe à l'adresse contenue dans le compteur ordinal 26. La valeur du compteur ordinal 26 est incrémentée, à chaque cycle d'horloge, du pas unitaire sauf dans certains cas particuliers tels que le cas des instructions de branchement.

Une instruction de branchement peut être soit inconditionnelle soit conditionnelle. Une instruction de branchement inconditionnelle provoque systématiquement, lorsqu'elle est exécutée par l'unité 22, un saut de plusieurs instructions légitimes. Pour cela, une nouvelle valeur est écrite dans le compteur ordinal 26. Cette nouvelle valeur correspond, typiquement, à une incrémentation ou une décrémentation de plusieurs pas unitaires.

Une instruction de branchement conditionnelle provoque, lorsqu'elle est exécutée par l'unité 22, un saut de plusieurs instructions légitimes uniquement si une condition est satisfaite. Si cette condition n'est pas satisfaite, alors le compteur ordinal est simplement incrémenté du pas unitaire.

Lors d'une opération 154, le microprocesseur 2 exécute les instructions de configuration contenues dans le code machine 32. Cela permet d'enregistrer les valeurs de la fréquence Fᵢ et des nombres Nb_{L} et Nbᵢ dans le registre interne CSR du microprocesseur 2. Par exemple, pour cela, lorsque ces instructions sont exécutées, elles provoquent l'enregistrement dans le registre CSR du microprocesseur 2 de valeurs prédéterminées pour la fréquence Fᵢ et les nombres Nb_{L} et Nbᵢ. Ces valeurs prédéterminées peuvent être égales à des constantes fixées dans le code machine 32. Ces valeurs prédéterminées peuvent aussi être calculées à partir d'autres instructions du code machine 32 préalablement exécutées. Par exemple, le code machine 32 comporte des instructions qui génèrent une valeur aléatoire codée sur 32 bits. Ensuite, les valeurs de la fréquence Fᵢ et des nombres Nb_{L} et Nbᵢ sont déterminées à partir de cette valeur aléatoire. À partir du moment où les valeurs de la fréquence Fᵢ et des nombres Nb_{L} et Nbᵢ ont été réglées à une valeur supérieure à zéro, une phase 170 de désynchronisation temporelle est exécutée en parallèle de la phase 152.

Il peut aussi être mis fin à la phase 170 de désynchronisation temporelle au cours de l'exécution du code machine 32. Par exemple, pour cela, le code machine 32 comporte des instructions d'arrêt de la désynchronisation temporelle. Lorsque ces instructions d'arrêt sont exécutées par l'unité 22, cela provoquent l'arrêt de la phase 170. Par exemple, une instruction d'arrêt affecte des valeurs nulles à au moins à la fréquence Fᵢ ou à au moins l'un des nombres Nb_{L} et Nbᵢ.

Lors de la phase 152, l'unité 22 exécute des instructions légitimes d'écriture d'une valeur dans un registre de l'ensemble 12. À chaque fois qu'une instruction légitime d'écriture est exécutée, lors d'une opération 156, l'unité 22 marque ce registre écrit comme étant valide. Pour cela, la valeur du bit de validité V_{Id} associée à ce registre est mise à « 1 ».

À l'inverse, à chaque fois que l'unité 22 exécute une instruction légitime qui enregistre le contenu d'un registre de l'ensemble 12 dans la mémoire 4, lors d'une opération 158, l'unité 22 marque ce registre comme étant « invalide ». Pour cela, ici, la valeur du bit de validité associée à ce registre est mise à « 0 ».

Plus précisément, ici, le bit de validité d'un registre est mis à « 0 » uniquement lorsque le contenu de ce registre est enregistré dans une partie de la mémoire principale 4 connue sous le terme de « pile d'exécution » (« stack » ou « call stack» en anglais). L'écriture du contenu d'un registre dans la pile d'exécution se produit par exemple à chaque fois que l'exécution d'une première fonction est interrompue pour débuter l'exécution d'une seconde fonction. Une fois l'exécution de la seconde fonction terminée, l'exécution de la première fonction est reprise à l'endroit où elle avait été interrompue. À cette occasion, le contenu des registres enregistrés dans la pile d'exécution sont restaurés dans l'ensemble 12 de registres, ce qui ramène la valeur de leur bit de validité à « 1 ». Ainsi, il est certain que lorsque le contenu d'un registre est enregistré dans la pile d'exécution, ce contenu n'est plus utilisé jusqu'à ce que l'exécution de la première fonction reprenne.

Par contre, le registre dont le contenu a été enregistré dans la pile d'exécution peut ensuite être écrit pendant l'exécution de la seconde fonction. Ainsi, le bit de validité de ce registre est égal à « 0 » à partir du moment où son contenu a été enregistré dans la pile d'exécution et jusqu'au moment où une instruction légitime du code machine de la seconde fonction vient écrire dans ce registre.

Lors de la phase 170 de désynchronisation temporelle, le module 28 alterne entre un état passif 180 et un état actif 182.

Dans l'état passif, le module 28 n'insère aucune séquence d'instructions factices entre deux instructions légitimes. Ainsi, tant que le module 28 est dans son état passif, les instructions légitimes sont exécutées immédiatement les unes après les autres. Tant que le module 28 est dans son état passif, le circuit 54 commande le multiplexeur 42 pour sélectionner systématiquement l'entrée 44. La sortie 50 du multiplexeur 42 est égale à « 0 » pour indiquer au décodeur 20, à l'unité 22 et au module 24 que les instructions exécutées sont des instructions légitimes.

Dans l'état passif, lors d'une opération 184, le module 28 relève et enregistre dans la mémoire 70, les opcodes de K instructions légitimes exécutées. Par exemple, ici, le module 28 déclenche le relevé et l'enregistrement des opcodes de K instructions légitimes successives à chaque front montant du signal S₆₀. La fréquence du signal S₆₀ est supérieure ou égale à la fréquence Fᵢ. Ainsi, il est certain qu'entre deux états actifs successifs du module 28, le contenu de la mémoire 70 est systématiquement renouvelé.

Seul l'opcode de chaque instruction légitime relevée est enregistré dans la mémoire 70. Ainsi, la mémoire 70 ne contient pas les opérandes des instructions légitimes relevées.

Dans l'état actif 182, le module 28 insère entre deux instructions légitimes ILₘ₋₁ et ILₘ une séquence Seqₖ.

Le module 28 bascule dans son état actif si le signal Sᵢ est égal à « 1 » et, en même temps, le signal Sₚ est égal à « 0 ». L'instant auquel le signal Sᵢ prend la valeur « 1 » est aléatoire puisque cela dépend du nombre rng généré par le générateur 62. Le signal Sₚ est égal à « 0 » seulement s'il n'y a aucune séquence d'instructions factices déjà en cours d'insertion entre les instructions ILₘ₋₁ et ILₘ.

Dans l'état actif, lors d'une opération 190, le constructeur 72 construit la séquence Seqₖ d'instructions factices et l'insère entre les instructions ILₘ₋₁ et ILₘ. Ici, le constructeur 72 construit les instructions factices les unes après les autres et les insère entre les instructions ILₘ₋₁ et ILₘ au fur et à mesure qu'elles sont construites.

Pour construire une instruction factice, le constructeur 72 commence par sélectionner un opcode dans la mémoire 70. Par exemple, il sélectionne les opcodes enregistrés dans la mémoire 70 dans l'ordre où ils ont été relevés.

Ensuite, si l'opcode sélectionné est un opcode qui doit être associé à des opérandes pour obtenir une instruction factice dont la syntaxe est correcte, il génère pour chaque opérande une valeur. Par exemple, ici, lorsque l'opcode sélectionné est différent de l'opcode d'une instruction d'écriture dans un registre, la valeur de chaque opérande est générée à partir du contenu d'un registre interne du microprocesseur 2. Le ou les registres internes choisis pour faire cela sont, de préférence, des registres dont le contenu varie fréquemment et typiquement avec une fréquence égale ou proche de la fréquence de l'horloge du microprocesseur 2. Par exemple, le registre contenant le compteur ordinal 26 peut être utilisé à cet effet. Cela évite d'avoir à générer la valeur des opérandes par un tirage aléatoire. Cela permet aussi d'obtenir des valeurs pour les opérandes qui sont différentes à chaque fois qu'une instruction factice est construite.

Lorsque l'opcode sélectionné est l'opcode d'une instruction qui écrit dans un registre de l'ensemble 12, l'un des opérandes de cette instruction contient l'adresse du registre à écrire. La valeur de cet opérande est ici générée en fonction du registre sélectionné par le circuit 74 afin d'obtenir à chaque fois, pour le registre à écrire, l'adresse d'un registre invalide. Ainsi, par la suite, l'instruction factice d'écriture construite pour écrire dans ce registre invalide peut écrire dans ce registre invalide sans que cela modifie le fonctionnement ou le résultat produit par la fonction sécurisée.

Une fois l'opcode sélectionné et les valeurs des différents opérandes générées, ces éléments sont concaténés les uns avec les autres pour former une instruction factice dont la syntaxe est correcte.

L'instruction factice ainsi construite est alors envoyée sur l'entrée 46 du multiplexeur 42. Dès que celle-ci est transmise au décodeur 20, le constructeur 72 construit l'instruction factice suivante.

À chaque fois que l'entrée 46 est sélectionnée, l'identifiant d'instructions factices délivrées sur la sortie 50 prend la valeur « 1 ». À l'inverse, l'identifiant d'instructions factices délivrées sur la sortie 50 prend la valeur « 0 » dès que l'entrée 44 est sélectionnée.

Ici, le constructeur 72 sélectionne Nbᵢ opcodes successifs dans la mémoire 70. Ensuite, il construit une sous-séquence de Nbᵢ instructions factices à partir des Nbᵢ opcodes sélectionnés. Puis, il réitère Nb_{L} fois cette construction d'une sous-séquence de Nbᵢ instructions factices. Ainsi, la séquence Seqₖ insérée entre les instructions ILₘ₋₁ et ILₘ comporte Nb_{L} fois Nbᵢ instructions factices.

Tant que la construction et l'insertion de toutes les instructions factices de la séquence n'est pas terminée, le constructeur 72 maintient le signal Sₚ égal à « 1 ». À l'inverse, dès que l'insertion de la séquence d'instructions factices est terminée, la valeur de ce signal Sₚ est ramenée à « 0 ».

Au prochain cycle d'horloge, l'instruction factice construite présente sur l'entrée 46 est décodée par le décodeur 20 puis lors du cycle d'horloge suivant, exécutée par l'unité 22.

Lorsque l'instruction factice exécutée est une instruction factice d'écriture dans un registre de l'ensemble 12, l'unité 22 exécute cette instruction et écrit une valeur dans le registre invalide dont l'adresse est contenue dans cette instruction factice d'écriture. Toutefois, le bit de validité du registre écrit reste égal à « 0 ». Lorsque l'instruction factice exécutée est une instruction factice qui provoque, lorsqu'elle est exécutée, l'écriture dans un registre qui n'est pas associé à un bit de validité ou dans la mémoire 4 et que l'identifiant d'instruction factice est égal à « 1 », l'unité 22 inhibe systématiquement cette écriture.

### Chapitre III - Variantes :

### Variantes de la sélection d'un registre invalide :

La sélection d'un registre invalide pour construire une instruction factice d'écriture dans un registre peut être omise. Dans ce cas, par exemple, l'unité 22 inhibe systématiquement l'écriture dans un registre de l'ensemble 12 lorsque l'identifiant d'instruction factice est égal à « 1 ». Dans un tel mode de réalisation, le circuit 74 peut alors être omis.

Dans un autre mode de réalisation, les instructions d'écriture dans un registre ou dans une mémoire ne sont pas relevées et enregistrées dans la mémoire 70. Dans ce cas-là aussi, le circuit 74 peut être omis puisqu'aucune instruction factice d'écriture dans un registre ou dans une mémoire n'est générée par le module 28. De plus, l'utilisation de l'identifiant d'instruction factice peut aussi être omise dans ce cas-là.

Le circuit 74 de sélection d'un registre invalide peut aussi être implémenté en entrée de l'ensemble 12 de registres pour systématiquement sélectionner un registre invalide tant que l'identifiant d'instructions factices est égal à « 1 ». Dans ce cas, lorsque le constructeur 72 construit une instruction factice d'écriture dans l'un des registres de l'ensemble 12, les valeurs des opérandes désignant le registre à écrire prennent une valeur prédéterminée ou choisie aléatoirement. Toutefois, au moment de l'écriture, le circuit 74 sélectionne automatiquement un registre invalide et non pas le registre correspondant à l'opérande de l'instruction factice d'écriture exécutée. Lorsque l'identifiant d'instruction factice est égal à "0", le circuit 74 est inactif. Dans ce cas, le registre dans lequel est écrit une donnée en réponse à l'exécution d'une instruction légitime d'écriture est celui désigné par l'opérande de cette instruction légitime.

En variante, le bit de validité Vld₀ est associé au registre R0 du microprocesseur 2. Le bit Vld₀ est alors toujours égal à "0" puisque ce registre R0 ne peut pas être écrit. Dans ce cas, l'étage 83 du circuit 74 est omis puisqu'il existe toujours au moins un bit de validité égal à "0".

Il existe d'autres méthodes pour associer un bit de validité à des registres. Par exemple, le bit de validité associé à chaque registre est enregistré dans une table d'association.

### Variantes du relevé et de la sélection des opcodes :

Dans un autre mode de réalisation, le module 28 de désynchronisation temporelle ne relève pas à intervalles réguliers les opcodes des instructions légitimes exécutées. Par exemple, le module 28 relève les opcodes des instructions légitimes uniquement après avoir reçu un signal de déclenchement de l'insertion d'une séquence d'instructions factices. Dans ce dernier cas, le module 28 relève, en réponse à ce signal, Nbᵢ opcodes puis, construit la séquence d'instructions factices à insérer à partir de ces opcodes relevés. Ainsi, les opcodes sont relevés uniquement lorsque cela est nécessaire.

L'ordre des instructions factices dans la séquence d'instructions factices n'est pas nécessairement le même que l'ordre dans lequel les opcodes sont relevés. Par exemple, en variantes, le constructeur 72 sélectionne aléatoirement, dans la mémoire 70, l'opcode à utiliser pour construire une instruction factice. Dans un autre mode de réalisation, au lieu de les sélectionner de façon aléatoire, il peut aussi en sélectionner simplement un sur deux ou selon toute autre logique prédéterminée à l'avance.

En variantes, en plus des instructions factices construites à partir des opcodes relevés, le module 28 génère des instructions factices supplémentaires sans utiliser les opcodes relevés. Par exemple, l'opcode de ces instructions factices supplémentaires est sélectionné de manière aléatoire ou de façon cyclique dans un ensemble prédéterminé d'opcodes possibles.

Dans un autre mode de réalisation, le module 28 ne relève pas nécessairement les opcodes de toute une série d'instructions légitimes immédiatement consécutives. Par exemple, le module 28 relève seulement un opcode sur deux ou un opcode sur trois de cette série d'instructions légitimes consécutives.

On notera que les opcodes relevés puis utilisés pour construire les instructions factices ne sont pas nécessairement les opcodes des instructions légitimes situées immédiatement avant l'instruction légitime ILₘ. Par exemple, l'instruction ILₘ₋₁ n'est pas utilisée pour construire les instructions factices d'une séquence insérée immédiatement avant l'instruction ILₘ.

Le cas où le nombre K d'opcodes enregistrables dans la mémoire 70 et les nombres Nb_{L} et Nbᵢ sont tous égaux à un, est un mode de réalisation avantageux car il rend encore plus difficile la détection d'une séquence Seqₖ.

En variante, lors de l'opération 184, en plus de relevé les opcodes des instructions légitimes exécutées, le module 28 relève une partie ou la totalité des opérandes de ces instructions légitimes. Ensuite, ces opérandes relevées sont, par exemple, utilisées pour construire les instructions factices.

### Autres variantes :

En variante, les valeurs des opérandes des instructions factices sont générées par tirage aléatoire.

Le procédé de désynchronisation temporelle décrit ici peut aussi être implémenté sous forme logicielle. Par exemple, des instructions qui réalisent les mêmes opérations que celles du module 28 sont insérées dans le code machine 32 et c'est l'exécution de ces instructions, par le microprocesseur 2, qui exécute le procédé de la figure 6. Dans le cadre d'une implémentation logicielle du module 28 de désynchronisation temporelle, les instructions factices peuvent être générées au moment de la compilation du code machine et non pas nécessairement au moment où ce code machine est exécuté.

Les différents modes de réalisation décrits ici peuvent être combinés entre eux.

### Chapitre IV : Avantages des modes de réalisation décrits.

Le fait de construire les instructions factices à partir des opcodes des instructions légitimes précédemment exécutées permet d'obtenir des instructions factices qui sont similaires à des instructions légitimes. Cela rend l'identification de ces instruction factices plus difficile puiqu'elles ressemblent nécessairement à des instructions légitimes de la fonction sécurisée. De plus, cela simplifie la génération des instructions factices par rapport au cas où celles-ci sont construites de façon totalement aléatoire. En effet, dans ce dernier cas, un tirage aléatoire des opcodes des instructions factices est nécessaire.

Le fait que les opérandes des instructions factices construites soient différentes des opérandes des instructions légitimes à partir desquelles elles ont été construites, permet de rendre plus difficile la fuite d'informations confidentielles. En effet, exécuter une instruction factice n'expose pas une nouvelle fois une opérande à une tentative d'attaque.

Le choix aléatoire des instructions légitimes relevées pour construire les instructions factices rend plus difficile l'identification des ces instructions factices lors de l'exécution de la fonction sécurisée. En effet, dans ces conditions, les instructions factices construites ne sont pas les mêmes d'une exécution à une autre de la fonction sécurisée.

Le fait de relevé à intervalle régulier les opcodes des instructions légitimes exécutées puis d'utiliser seulement les derniers opcodes relevés pour construire les instructions factices permet simplement de choisir aléatoirement les opcodes relevés. En effet, après l'exécution de la première séquence Seq₁, les instants auxquels s'exécutent les instructions légitimes sont temporellement désynchronisés par rapport au début de l'exécution de la fonction sécurisée. Dès lors, à la fin de chaque intervalle régulier, les opcodes des instructions légitimes relevées sont différents d'une exécution à l'autre de la fonction sécurisée.

Le fait de marquer à chaque instant, au cours de l'exécution de la fonction sécurisée, les registres qui sont invalides, permet de les utiliser pour construire des instructions factices d'écriture. Ainsi, les instructions factices d'écriture construites utilisent les mêmes registres que des instructions légitimes, c'est-à-dire des registres qui précédemment ou ultérieurement pourront être utilisés par des instructions légitimes. Il n'est dès lors pas nécessaire de réserver des registres du microprocesseur pour l'usage de ces instructions factices d'écriture. Autrement dit, il n'existe pas de registre réservé à l'usage exclusif des instructions factices d'écriture. De plus, cela rend plus difficile la détection des instructions factices d'écriture car elles utilisent les mêmes registres que les instructions légitimes au cours de la même exécution de la fonction sécurisée.

## Revendications

1. Procédé d'exécution d'une fonction, sécurisé par désynchronisation temporelle, cette fonction étant exécutée par un microprocesseur, ce procédé comportant :
- le chargement (152) les unes après les autres des instructions légitimes de la fonction, ces instructions légitimes déterminant le résultat produit par la fonction,
- l'exécution (152), par une unité arithmétique et logique du microprocesseur, des instructions chargées les unes après les autres dans l'ordre où elles sont chargées,
- le déclenchement aléatoire de l'insertion, d'une séquence d'instructions factices après une première instruction légitime et immédiatement avant une seconde instruction légitime, puis
- l'exécution, par l'unité arithmétique et logique, de la séquence d'instructions factices, cette exécution de cette séquence d'instructions factices :
- retardant l'instant où est exécutée la seconde instruction légitime par rapport à l'instant où est exécutée la première instruction légitime, et
- n'ayant aucune influence sur l'exécution des instructions légitimes et donc aucune influence sur le résultat produit par la fonction,
**caractérisé en ce que** le procédé comporte:
- lorsque la première instruction légitime est chargée, le relevé (184) de l'opcode de cette première instruction légitime, puis
- la construction (190) d'une instruction factice à partir de cet opcode relevé, l'instruction factice ainsi construite étant identique à la première instruction légitime sauf que ses opérandes sont différentes, puis
- l'incorporation de l'instruction factice ainsi construite dans la séquence d'instructions factices utilisée pour retarder l'instant où est exécuté la seconde instruction légitime.

2. Procédé selon la revendication 1, dans lequel la première instruction légitime dont l'opcode est relevé est choisie aléatoirement parmi des instructions légitimes du code machine exécutées avant la seconde instruction légitime.

3. Procédé selon la revendication 2, dans lequel le procédé comporte :
- le relevé (184) à intervalle régulier d'une instruction légitime chargée, et
- lorsque l'insertion d'une séquence d'instructions factices est déclenchée, l'utilisation de la dernière instruction légitime relevée en tant que première instruction légitime utilisée pour construire (190) une instruction factice de cette séquence d'instructions factices insérées.

4. Procédé selon l'une quelconque des revendications précédentes, dans lequel le procédé comporte :
- lors de l'exécution, par l'unité arithmétique et logique, d'une instruction légitime qui écrit une valeur dans un registre du microprocesseur, le marquage (156) de ce registre comme étant "valide", et
- lors de l'enregistrement du contenu d'un registre du microprocesseur dans la mémoire principale, le marquage (158) de ce registre comme étant "invalide", et
- lors de la construction (190) de l'instruction factice, lorsque l'opcode relevé de la première instruction factice correspond à l'opcode d'une instruction d'écriture dans un registre du microprocesseur, l'opérande de cet opcode qui contient l'adresse du registre à écrire est pris égal à l'adresse d'un des registres actuellement marqués comme étant "invalide" pour obtenir une instruction factice d'écriture dans un registre marqué comme étant "invalide", puis
- en réponse à l'exécution de cette instruction factice d'écriture construite, l'unité arithmétique et logique écrit une valeur dans ce registre.

5. Procédé selon la revendication 4, dans lequel seul l'enregistrement du contenu d'un registre du microprocesseur dans la pile d'exécution de la mémoire principale provoque le marquage de ce registre comme étant "invalide".

6. Procédé selon l'une quelconque des revendications précédentes, dans lequel :
- lors de l'exécution de la séquence d'instructions factices, à chaque fois que l'instruction factice à exécuter par l'unité arithmétique et logique est une instruction factice d'écriture dans un registre ou une mémoire contenant des données qui influencent le résultat produit par la fonction, un indicateur signale à l'unité arithmétique et logique que l'instruction en cours d'exécution est une instruction factice d'écriture, et
- en réponse, l'unité arithmétique et logique inhibe l'écriture dans ce registre ou cette mémoire contenant des données qui influencent le résultat produit par la fonction.

7. Microprocesseur pour la mise en oeuvre d'un procédé conforme à l'une quelconque des revendications précédentes, dans lequel le microprocesseur comporte :
- un chargeur (18) apte à charger, les unes après les autres, des instructions légitimes de la fonction, ces instructions légitimes déterminant le résultat produit par la fonction,
- une unité arithmétique et logique (22) apte à exécuter les instructions chargées les unes après les autres dans l'ordre où elles sont chargées,
- un module matériel (28) de désynchronisation temporelle apte à déclencher aléatoirement l'insertion d'une séquence d'instructions factices après une première instruction légitime et immédiatement avant une seconde instruction légitime, cette séquence d'instructions factices étant configurée pour que, son exécution, par l'unité arithmétique et logique :
- retarde l'instant où est exécutée la seconde instruction légitime par rapport à l'instant où est exécutée la première instruction légitime, et
- n'a aucune influence sur l'exécution des instructions légitimes et donc aucune influence sur le résultat produit par la fonction,
**caractérisé en ce que** le module matériel (28) de désynchronisation temporelle est configuré pour exécuter les opérations suivantes :
- lorsque la première instruction légitime est chargée, le relevé de l'opcode de cette première instruction légitime, puis
- la construction d'une instruction factice à partir de cet opcode relevé, l'instruction factice ainsi construite étant identique à la première instruction légitime sauf que ses opérandes sont différentes, puis
- l'incorporation de l'instruction factice ainsi construite dans la séquence d'instructions factices utilisée pour retarder l'instant où est exécuté la seconde instruction légitime.

## Patentansprüche

1. Verfahren zur Ausführung einer Funktion, gesichert durch zeitliche Desynchronisation, wobei diese Funktion von einem Mikroprozessor ausgeführt wird, wobei dieses Verfahren aufweist:
- das Laden (152) der legitimen Befehle der Funktion nacheinander, wobei diese legitimen Befehle das von der Funktion erzeugte Ergebnis bestimmen,
- die Ausführung (152), durch eine arithmetische und logische Einheit des Mikroprozessors, der nacheinander geladenen Befehle in der Reihenfolge, in der sie geladen werden,
- die zufällige Auslösung der Einfügung einer Folge von Scheinbefehlen nach einem ersten legitimen Befehl und direkt vor einem zweiten legitimen Befehl, dann
- die Ausführung, durch die arithmetische und logische Einheit, der Folge von Scheinbefehlen, wobei diese Ausführung dieser Folge von Scheinbefehlen:
- den Zeitpunkt, in dem der zweite legitime Befehl ausgeführt wird, bezüglich des Zeitpunkts verzögert, in dem der erste legitime Befehl ausgeführt wird, und
- keinen Einfluss auf die Ausführung der legitimen Befehle und somit keinen Einfluss auf das von der Funktion erzeugte Ergebnis hat,
**dadurch gekennzeichnet, dass** das Verfahren aufweist:
- wenn der erste legitime Befehl geladen wird, die Erfassung (184) des Opcodes dieses ersten legitimen Befehls, dann
- die Konstruktion (190) eines Scheinbefehls ausgehend von diesem erfassten Opcode, wobei der so konstruierte Scheinbefehl gleich dem ersten legitimen Befehl ist, abgesehen davon, dass seine Operanden unterschiedlich sind, dann
- die Eingliederung des so konstruierten Scheinbefehls in die Folge von Scheinbefehlen, die verwendet wird, um den Zeitpunkt zu verzögern, in dem der zweite legitime Befehl ausgeführt wird.

2. Verfahren nach Anspruch 1, wobei der erste legitime Befehl, dessen Opcode erfasst wird, zufällig unter legitimen Befehlen des Maschinencodes ausgewählt wird, die vor dem zweiten legitimen Befehl ausgeführt werden.

3. Verfahren nach Anspruch 2, wobei das Verfahren aufweist:
- die Erfassung (184), in regelmäßigen Abständen, eines geladenen legitimen Befehls, und
- wenn die Einfügung einer Folge von Scheinbefehlen ausgelöst wird, die Verwendung des letzten erfassten legitimen Befehls als erster legitimer Befehl, der verwendet wird, um einen Scheinbefehl dieser Folge von eingefügten Scheinbefehlen zu konstruieren (190).

4. Verfahren nach einem der vorhergehenden Ansprüche, wobei das Verfahren aufweist:
- bei der Ausführung, durch die arithmetische und logische Einheit, eines legitimen Befehls, der einen Wert in ein Register des Mikroprozessors schreibt, die Markierung (156) dieses Registers als "gültig", und
- bei der Speicherung des Inhalts eines Registers des Mikroprozessors im Hauptspeicher die Markierung (158) dieses Registers als "ungültig", und
- bei der Konstruktion (190) des Scheinbefehls, wenn der erfasste Opcode des ersten Scheinbefehls dem Opcode eines Schreibbefehls in einem Register des Mikroprozessors entspricht, der Operand dieses Opcodes, der die Adresse des zu schreibenden Registers enthält, gleich der Adresse eines der aktuell als "ungültig" markierten Register genommen wird, um einen Scheinschreibbefehl in einem als "ungültig" markierten Register zu erlangen, dann
- als Antwort auf die Ausführung dieser konstruierten Scheinschreibbefehls die arithmetische und logische Einheit einen Wert in dieses Register schreibt.

5. Verfahren nach Anspruch 4, wobei nur das Speichern des Inhalts eines Registers des Mikroprozessors in den Ausführungsstapel des Hauptspeichers die Markierung dieses Registers als "ungültig" bewirkt.

6. Verfahren nach einem der vorhergehenden Ansprüche, wobei:
- bei der Ausführung der Folge von Scheinbefehlen jedes Mal, wenn der von der arithmetischen und logischen Einheit auszuführende Scheinbefehl einen Scheinschreibbefehl in ein Register oder einen Speicher ist, der Daten enthält, die das von der Funktion erzeugte Ergebnis beeinflussen, ein Indikator der arithmetischen und logischen Einheit signalisiert, dass der gerade ausgeführte Befehl ein Scheinschreibbefehl ist, und
- als Antwort die arithmetische und logische Einheit das Schreiben in dieses Register oder diesen Speicher verhindert, der Daten enthält, die das von der Funktion erzeugte Ergebnis beeinflussen.

7. Mikroprozessor zur Durchführung eines Verfahrens nach einem der vorhergehenden Ansprüche, wobei der Mikroprozessor aufweist:
- ein Ladegerät (18), das fähig ist, legitime Befehle der Funktion nacheinander zu laden, wobei diese legitimen Befehle das von der Funktion erzeugte Ergebnis bestimmen,
- eine arithmetische und logische Einheit (22), die fähig ist, die nacheinander geladenen Befehle in der Reihenfolge auszuführen, in der sie geladen werden,
- ein Hardwaremodul (28) zur zeitlichen Desynchronisation, das fähig ist, die Einfügung einer Folge von Scheinbefehlen nach einem ersten legitimen Befehl und direkt vor einem zweiten legitimen Befehl zufällig auszulösen, wobei diese Folge von Scheinbefehlen konfiguriert ist, damit ihre Ausführung durch die arithmetische und logische Einheit:
- den Zeitpunkt, in dem der zweite legitime Befehl ausgeführt wird, bezüglich des Zeitpunkts verzögert, in dem der erste legitime Befehl ausgeführt wird, und
- keinen Einfluss auf die Ausführung der legitimen Befehle und somit keinen Einfluss auf das von der Funktion erzeugte Ergebnis hat,
**dadurch gekennzeichnet, dass** das Hardwaremodul (28) zur zeitlichen Desynchronisation konfiguriert ist, um die folgenden Operationen auszuführen :
- wenn der erste legitime Befehl geladen wird, die Erfassung des Opcodes dieses ersten legitimen Befehls, dann
- die Konstruktion eines Scheinbefehls ausgehend von diesem erfassten Opcode, wobei der so erzeugte Scheinbefehl gleich dem ersten legitimen Befehl ist, außer dass seine Operanden unterschiedlich sind, dann
- die Eingliederung des so konstruierten Scheinbefehls in die Folge von Scheinbefehlen, die verwendet wird, um den Zeitpunkt zu verzögern, in dem der zweite legitime Befehl ausgeführt wird.

## Claims

1. Method for executing a function, secured by temporal desynchronization, this function being executed by a microprocessor, this method comprising:
- loading (152) one after another the legitimate instructions of the function, these legitimate instructions determining the result produced by the function,
- executing (152), by means of an arithmetic logic unit of the microprocessor, the instructions loaded one after another in the order in which they are loaded,
- randomly triggering insertion of a sequence of dummy instructions after a first legitimate instruction and immediately before a second legitimate instruction, then
- executing, by means of the arithmetic logic unit, the sequence of dummy instructions, this execution of this sequence of dummy instructions:
- delaying the time at which the second legitimate instruction is executed with respect to the time at which the first legitimate instruction is executed, and
- having no influence on the execution of the legitimate instructions and therefore no influence on the result produced by the function,
**characterized in that** the method comprises:
- when the first legitimate instruction is loaded, noting (184) the opcode of this first legitimate instruction, then
- constructing (190) a dummy instruction on the basis of this noted opcode, the dummy instruction thus constructed being identical to the first legitimate instruction except that its operands are different, then
- incorporating the dummy instruction thus constructed into the sequence of dummy instructions used to delay the time at which the second legitimate instruction is executed.

2. Method according to Claim 1, wherein the first legitimate instruction the opcode of which is noted is randomly chosen from legitimate machine-code instructions executed before the second legitimate instruction.

3. Method according to Claim 2, wherein the method comprises:
- noting (184) at regular intervals a loaded legitimate instruction, and
- when insertion of a sequence of dummy instructions is triggered, using the last noted legitimate instruction as first legitimate instruction used to construct (190) a dummy instruction of this sequence of inserted dummy instructions.

4. Method according to any one of the preceding claims, wherein the method comprises:
- during execution, by the arithmetic logic unit, of a legitimate instruction that writes a value to a register of the microprocessor, marking (156) this register as being "valid", and
- during storage of the content of a register of the microprocessor in the main memory, marking (158) this register as being "invalid", and
- during construction (190) of the dummy instruction, when the noted opcode of the first dummy instruction corresponds to the opcode of an instruction to write to a register of the microprocessor, the operand of this opcode that contains the register address to be written to is set equal to the address of one of the registers currently marked as being "invalid" in order to obtain a dummy instruction to write to a register marked as being "invalid", then
- in response to the execution of this constructed dummy write instruction, the arithmetic logic unit writes a value to this register.

5. Method according to Claim 4, wherein only storage of the content of a register of the microprocessor in the call stack of the main memory causes this register to be marked as being "invalid".

6. Method according to any one of the preceding claims, wherein:
- during execution of the sequence of dummy instructions, each time the dummy instruction to be executed by the arithmetic logic unit is a dummy instruction to write to a register or a memory containing data that influence the result produced by the function, an indicator signals to the arithmetic logic unit that the instruction in the process of being executed is a dummy write instruction, and
- in response, the arithmetic logic unit inhibits writing to this register or this memory containing data that influence the result produced by the function.

7. Microprocessor for implementing a method according to any one of the preceding claims, wherein the microprocessor comprises:
- a loader (18) able to load, one after another, legitimate instructions of the function, these legitimate instructions determining the result produced by the function,
- an arithmetic logic unit (22) able to execute the instructions loaded one after another in the order in which they are loaded,
- a hardware temporal-desynchronization module (28) able to randomly trigger insertion of a sequence of dummy instructions after a first legitimate instruction and immediately before a second legitimate instruction, this sequence of dummy instructions being configured so that its execution, by the arithmetic logic unit:
- delays the time at which the second legitimate instruction is executed with respect to the time at which the first legitimate instruction is executed, and
- has no influence on the execution of the legitimate instructions and therefore no influence on the result produced by the function,
**characterized in that** the hardware temporal-desynchronization module (28) is configured to execute the following operations:
- when the first legitimate instruction is loaded, noting the opcode of this first legitimate instruction, then
- constructing a dummy instruction on the basis of this noted opcode, the dummy instruction thus constructed being identical to the first legitimate instruction except that its operands are different, then
- incorporating the dummy instruction thus constructed into the sequence of dummy instructions used to delay the time at which the second legitimate instruction is executed.
